# EUROPEAN PATENT APPLICATION

(11) **EP 1 967 823 A1**
(43) Date of publication of application: **10.09.2008**
(21) Application number: 08101114.0
(22) Date of filing: 30.01.2008
(51) Int. Cl.: G01C 22/00

(54) **A monitoring system**

(30) Priority: 02.02.2007 CN 07101321
(71) Applicant: National Electronics & Watch Co. Ltd., Aberdeen, Hong Kong (CN)
(72) Inventor: Yuen, Wai Kwong, Hong Kong (CN)
(74) Representative: Vogel, Andreas

(57) **Abstract**

A monitoring system (10) for monitoring the movement of a person in locomotion on foot, the system (10) comprising: a vibration sensor (38) to generate a signal when vibration is sensed, the sensor (38) being provided for footwear (20) of the person; a first unit (30) to wirelessly transmit the generated signal to a second unit (40) in response to sensed vibration; wherein a pulse width of the generated signal is measured to determine whether a person is taking a step.

## Description

### Technical Field

The invention concerns a monitoring system for monitoring the movement of a person in locomotion on foot.

### Background of the Invention

For runners and joggers, the ability to monitor their distance and speed is an important part of their exercise regime to measure their performance.

Prior art devices for monitoring a person is running include pedometers. Some kinds of pedometers use accelerometers. Accelerometers are expensive, which increases the total cost to the consumer. Consequently, as the price remains high, there has been no widespread adoption of pedometers in the market.

Accordingly, there is a desire for a device that is able to monitor the distance and speed of a person as they are walking or running, which is less costly to manufacture.

### Summary of the Invention

In a first preferred aspect, there is provided a monitoring system for monitoring the movement of a person in locomotion on foot, the system comprising:
a vibration sensor to generate a signal when vibration is sensed, the sensor being provided for footwear of the person;
a first unit to wirelessly transmit the generated signal to a second unit in response to sensed vibration;
wherein a pulse width of the generated signal is measured to determine whether a person is taking a step.

The system may further comprise a processor to compute the step rate (number of steps per minute), speed and distance of the movement of the person based on elapsed time, height of the person and number of steps taken by the person.

The vibration sensor may be a ceramic sensor and is part of the first unit and is provided in a footpod mounted within or on the exterior of a shoe.

The second unit may be attached to the wrist of the person such as a watch with a display screen to display the step rate, speed or distance of the movement of the person.

The processor may be a microcontroller unit (MCU) that is part of the second unit.

The first unit may comprise an MCU that is activated only when the pulse width exceeds a predetermined length.

If the second unit does not acknowledge the signal transmitted from the first unit, the MCU of the first unit may be deactivated to save on power consumption.

The first unit may further comprise a filter to filter the signal generated by the vibration sensor before input into an import port of the MCU of the first unit.

The MCU of the first unit may comprise a timer and a comparator to measure the filtered signal.

A stride length of the person may be computed by the following formula: C X HT X NS X KC;
where C is a constant, HT is the height of the person, NS is the number of steps per minute, and KC is a constant by calibration.

The distance of the movement of the person may be computed by multiplying the stride length and the number of steps taken by the person, and the speed is computed by dividing the distance of the movement of the person over the elapsed time.

The second unit may comprise a memory to record the movement of the person for a predetermined number of sessions, the recorded movement being able to be transmitted to a computer.

In a second aspect, there is provided a first unit for monitoring the movement of a person in locomotion on foot, the unit being provided for footwear of the person, the unit comprising:
a vibration sensor to generate a signal when vibration is sensed;
a transmitter to wirelessly transmit the generated signal to a second unit in response to sensed vibration;
wherein a pulse width of the generated signal is measured to determine whether a person is taking a step.

The first unit may further comprise: a filter to filter the signal generated by the vibration sensor.

The first unit may further comprise: an MCU having a timer and a comparator to measure the filtered signal.

In a third aspect, there is provided a second unit for monitoring the movement of a person in locomotion on foot, the unit comprising:
a receiver to wirelessly receive a generated signal from a first unit, the generated signal being generated by a vibration sensor when vibration is sensed, the sensor being provided for footwear of the person;
a display screen to display the step rate, speed or distance of the movement of the person;
wherein a pulse width of the generated signal is measured to determine whether a person is taking a step.

The second unit may further comprise:
a memory to record the movement of the person for a predetermined number of sessions, the recorded movement being able to be transmitted to a computer

In a fourth aspect, there is provided a method for monitoring the movement of a person in locomotion on foot, the method comprising:
generating a signal when vibration is sensed by a vibration sensor provided for footwear of the person;
transmitting the generated signal to a second unit in response to sensed vibration; and
measuring a pulse width of the generated signal to determine whether a person is taking a step.

The method may further comprise: computing the step rate (number of steps per minute), speed and distance of the movement of the person based on elapsed time, height of the person and number of steps taken by the person.

The method may further comprise: displaying the step rate, speed or distance of the movement of the person via the second unit.

The method may further comprise: filtering the generated signal before input into an import port of an MCU.

The method may further comprise: activating the MCU only when the pulse width exceeds a predetermined length.

The method may further comprise: deactivating the MCU if the second unit does not acknowledge the transmitted signal.

The method may further comprise: recording the movement of the person for a predetermined number of sessions, the recorded movement being able to be transmitted to a computer.

The method may further comprise: computing a stride length of the person using the following formula: C X HT X NS X KC; where C is a constant, HT is the height of the person, NS is the number of steps per minute, and KC is a constant by calibration.

The method may further comprise:
computing the distance of the movement of the person by multiplying the stride length and the number of steps taken by the person; and
computing the speed by dividing the distance of the movement of the person over the elapsed time.

### Brief Description of the Drawings

An example of the invention will now be described with reference to the accompanying drawings, in which:
Figure 1 is a block diagram of a monitoring system in accordance with a preferred embodiment of the present invention;

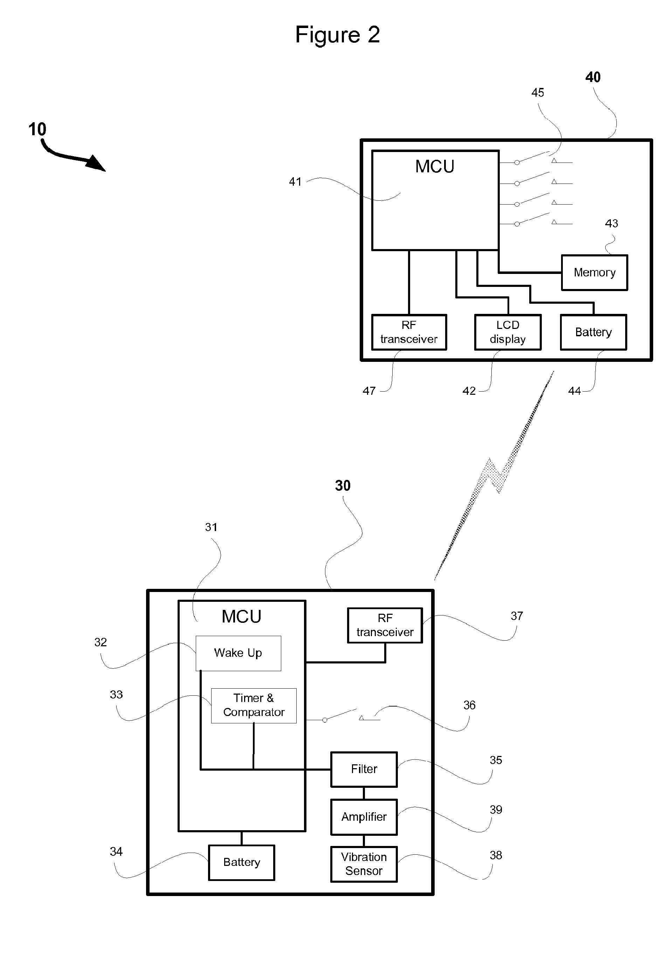

Figure 2 is a system diagram of the monitoring system of Figure 1;
Figure 3 is a graphical depiction of a second unit in accordance with a preferred embodiment of the present invention;
Figure 4 is a front plan view and side plan view of a vibration sensor of the monitoring system of Figure 1; and
Figure 5 is a chart diagram of the pulse width length of a generated signal when vibration is sensed.

### Detailed Description of the Drawings

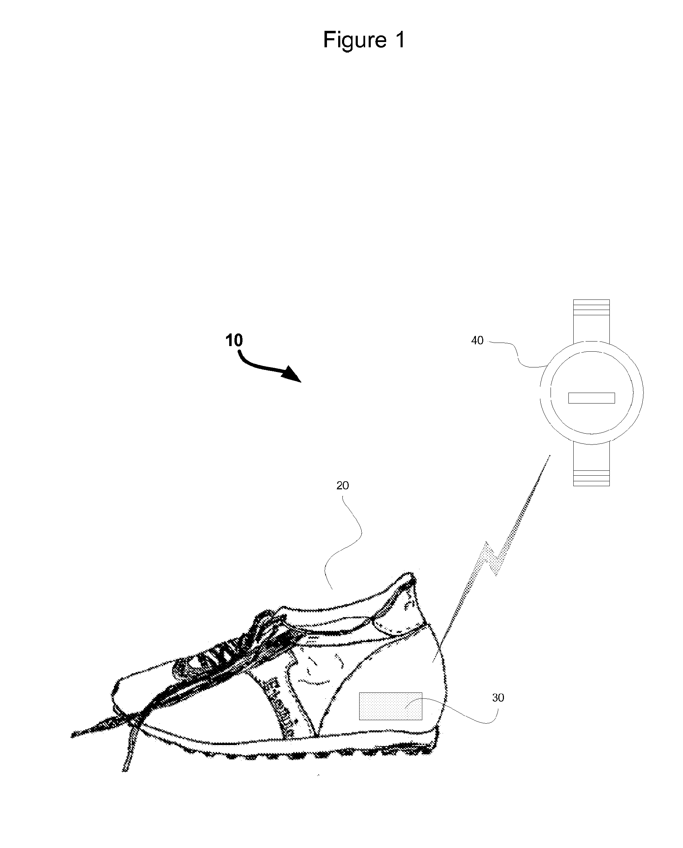

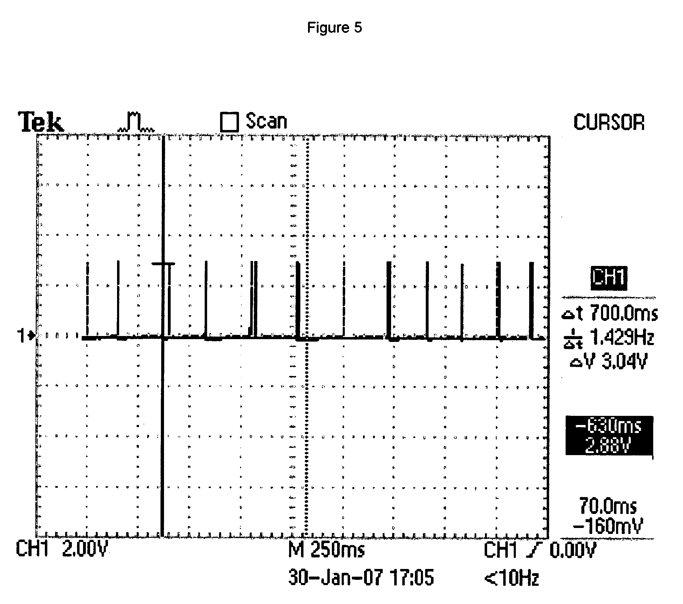

Referring to Figure 1, there is provided a monitoring system 10 for monitoring the movement of a person in locomotion on foot. The system 10 generally comprises: a vibration sensor 38 and a first unit 30. The vibration sensor 38 is a ceramic sensor which generates a signal when vibration is sensed, the sensor 38 being provided for footwear 20 of the person. For example, the ceramic sensor may be one manufactured by National Electronics & Watch Co. Ltd, having model number 3950082. Preferably, the vibration sensor 38 is part of the first unit 30 and is provided in a footpod mounted within or on the exterior of a shoe 20. The first unit 30 wirelessly transmits the generated signal to a second unit 40 in response to sensed vibration. A pulse width of the generated signal is measured to determine whether a person is taking a step. If the pulse width exceeds a predetermined length, it is considered that the person is taking a step. Turning to Figure 5, a chart diagram of the pulses when vibration is sensed by the vibration sensor 30 is illustrated over a 250 ms time period. The length of the pulse width is calculated as the gap between each of the pulses. If the length exceeds a predetermined reference value, then person is assumed to be taking a step, which is then used for further calculations such as step rate, speed, and distance travelled.

The system 10 further comprises a microcontroller unit (MCU) 41 to compute the step rate (number of steps per minute), speed and distance of the movement of the person based on elapsed time, height of the person and number of steps taken by the person. The MCU 41 is part of the second unit 40. The stride length of the person is computed by the following formula: C X HT X NS X KC; where C is a constant, HT is the height of the person, NS is the number of steps per minute, and KC is a constant by calibration. The distance of the movement of the person is computed by multiplying the stride length and the number of steps taken by the person, and the speed is computed by dividing the distance of the movement of the person over the elapsed time. The MCU 41 may be a MSP430 Ultra-Low Power Microcontroller manufactured by Texas Instruments.

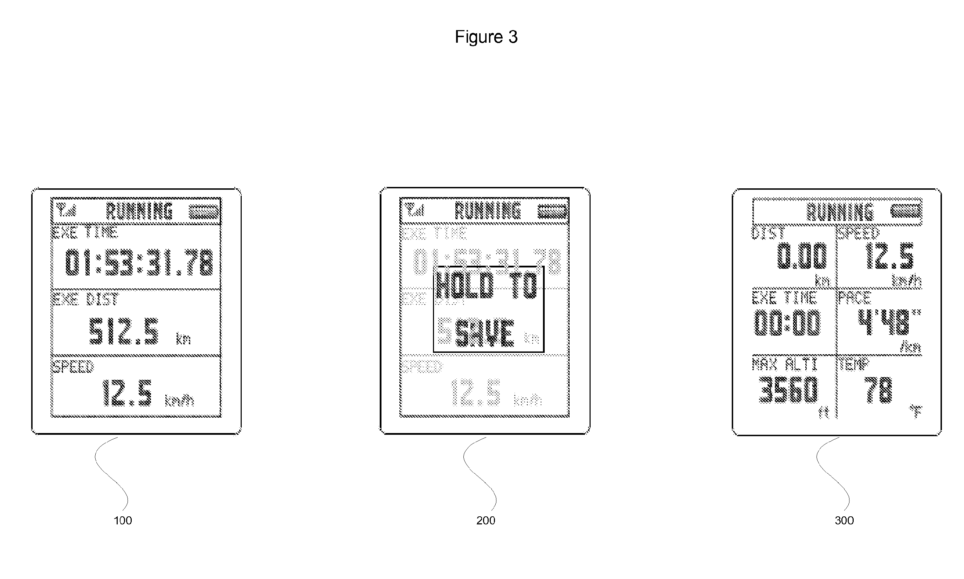

The second unit 40 is attached to the wrist of the person such as a watch with a LCD display screen 42 to display the step rate, speed or distance of the movement of the person. The second unit 40 comprises a memory 43 to record the movement of the person for a predetermined number of sessions. The recorded movement in the memory 43 is able to be downloaded to a computer (not shown). A battery 44 provides power to the components on the second unit 40. Turning to Figure 3, the display screen 42 is able to display three screens. The first screen 100 shows the person the elapsed time since commencing running, the distance traveled and the present speed. The second screen 200 shows the person saving the details shown in the first screen 100 into the memory 43. The third screen 300 shows more details than the first screen 100 such as pace, maximum altitude and temperature.

Both the first and second units 30, 40 have a respective Radio Frequency (RF) transceiver 37, 47 for wireless communication with each other. If the second unit 40 does not acknowledge the signal transmitted from the first unit 30 back to the first unit 30 for approximately three minutes, the MCU 31 of the first unit 30 is deactivated to reduce power consumption. Also, both the first and second units 30, 40 have electrical switches 36, 45, respectively, connected to their MCUs 31, 41.

The MCU 31 of the first unit 30 is activated only when the pulse width exceeds a predetermined length. This is governed by a wake up module 32 in the MCU 31 which causes activation of the MCU 31 from a deactivated mode. Again, this is to reduce power consumption and extend battery life. The first unit 30 further comprises an amplifier 39 to amplify the signal generated by the vibration sensor 38. The amplified signal is then filtered by a filter 35 (Low Pass Filter) before it is input via an input port of the MCU 31 of the first unit 30. The MCU 31 of the first unit 30 comprises a timer and a comparator 33 to measure the filtered signal. The measured signal 31 is interpreted by the MCU 31 and then transmitted to the second unit 40 for computation and subsequent display to the person. A battery 34 provides power to the components on the first unit 30.

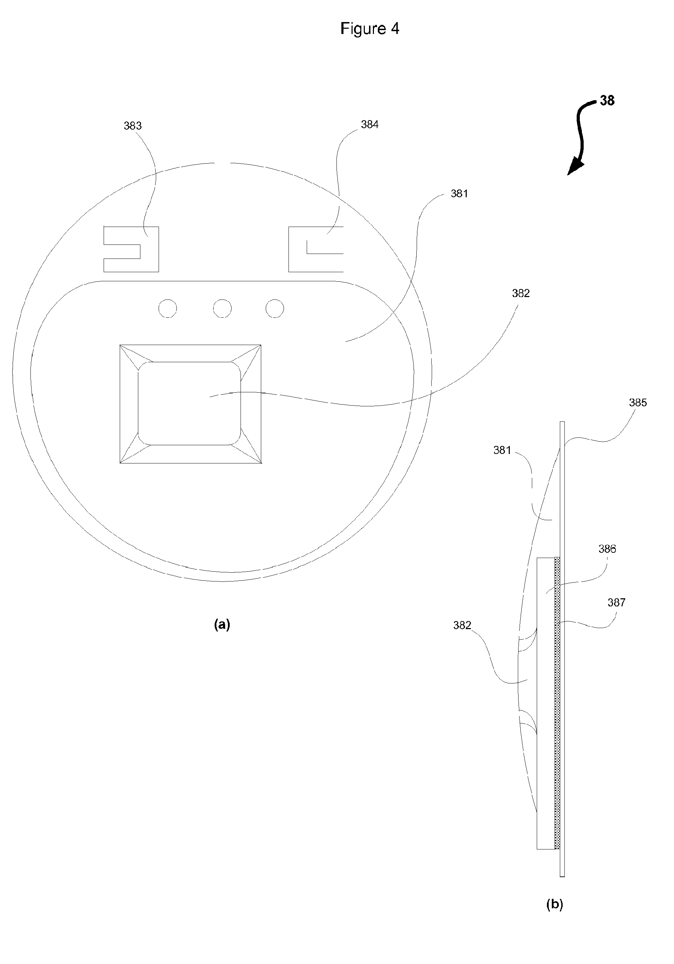

Referring to Figure 4(a) and (b), the vibration sensor 38 is a ceramic sensor manufactured by National Electronics & Watch Co. Ltd, having model number 3950082. The sensor 38 generally comprises an epoxy coating 381, IC components 382 to transmit electrical signals and VSS contacts 383, 384. A ceramic element 387 is provided behind a copper plate 385. Behind the ceramic element 387 is a PCB substrate 386. When force is exerted on the ceramic element 387 via copper plate 385, a charge output is generated that is directly proportional to vibration motion. This is detected by circuitry on the PCB substrate 386, and an electrical signal proportional to the detected vibration motion is transmitted via the lC components 382 to the amplifier 39 in the first unit 30.

The first unit 30 may have a unique identification code, and the second unit 40 may also have a unique identification code. This allows a specific first unit 30 to be paired with a specific second unit 40 to avoid signal interference, for example, if there are two or more joggers running together. Thus, the user may configure and preset their second unit 40 so that it will only receive data from its paired first unit 30. The unique identification code of the first unit 30 may also be displayed on the LCD display screen 42 of the second unit 40.

It will be appreciated by persons skilled in the art that numerous variations and/or modifications may be made to the invention as shown in the specific embodiments without departing from the scope or spirit of the invention as broadly described. The present embodiments are, therefore, to be considered in all respects illustrative and not restrictive.

## Claims

1. A monitoring system for monitoring the movement of a person in locomotion on foot, the system comprising:
a vibration sensor to generate a signal when vibration is sensed, the sensor being provided for footwear of the person;
a first unit to wirelessly transmit the generated signal to a second unit in response to sensed vibration;
wherein a pulse width of the generated signal is measured to determine whether a person is taking a step.

2. The system according to claim 1, further comprising a processor to compute the step rate (number of steps per minute), speed and distance of the movement of the person based on elapsed time, height of the person and number of steps taken by the person.

3. The system according to claim 1, wherein the vibration sensor is a ceramic sensor and is part of the first unit and is provided in a footpod mounted within or on the exterior of a shoe.

4. The system according to claim 2, wherein the second unit is attached to the wrist of the person such as a watch with a display screen to display the step rate, speed or distance of the movement of the person.

5. The system according to claim 2, wherein the processor is a microcontroller unit (MCU) that is part of the second unit.

6. The system according to claim 1, wherein the first unit comprises an MCU that is activated only when the pulse width exceeds a predetermined length.

7. The system according to claim 6, wherein if the second unit does not acknowledge the signal transmitted from the first unit, the MCU of the first unit is deactivated to save on power consumption.

8. The system according to claim 6, wherein the first unit further comprises a filter to filter the signal generated by the vibration sensor before input into an import port of the MCU of the first unit.

9. The system according to claim 8, wherein the MCU of the first unit comprises a timer and a comparator to measure the filtered signal.

10. The system according to claim 2, wherein a stride length of the person is computed by the following formula: C X HT X NS X KC;
where C is a constant, HT is the height of the person, NS is the number of steps per minute, and KC is a constant by calibration.

11. The system according to claim 10, wherein the distance of the movement of the person is computed by multiplying the stride length and the number of steps taken by the person, and the speed is computed by dividing the distance of the movement of the person over the elapsed time.

12. The system according to claim 1, wherein the second unit comprises a memory to record the movement of the person for a predetermined number of sessions, the recorded movement being able to be transmitted to a computer.
